# EUROPÄISCHE PATENTSCHRIFT

(11) **EP 2 959 427 B1**
(45) Veröffentlichungstag und Bekanntmachung des Hinweises auf die Patenterteilung: **16.12.2020**
(21) Anmeldenummer: 14704154.5
(22) Anmeldetag: 13.02.2014
(51) Int. Cl.: G06K 7/00, G06K 7/10

(54) **LESE/SCHREIBEINRICHTUNG FÜR CHIPKARTEN**
READ/WRITE DEVICE FOR CHIP CARDS
SYSTÈME DE LECTURE/ÉCRITURE DE CARTES À PUCE

(30) Priorität: 19.02.2013 DE 102013101622
(43) Veröffentlichungstag der Anmeldung: 30.12.2015
(73) Patentinhaber: Bundesdruckerei GmbH, 10969 Berlin (DE)
(72) Erfinder: BAUDACH, Steffen, 13189 Berlin (DE); TSCHORN, Stefan, 12163 Berlin (DE); VALTA, Thomas, 93489 Schorndorf (DE); VONRUETY, Mario, 10247 Berlin (DE)
(74) Vertreter: Patentship Patentanwaltsgesellschaft mbH
(86) Internationale Anmeldenummer: PCT/EP2014/052814
(87) Internationale Veröffentlichungsnummer: WO 2014/128049

(56) Entgegenhaltungen:
- WO-A1-01/15075
- CN-U- 202 259 897
- DE-A1- 10 252 348
- DE-A1-102007 035 645
- DE-U1-202004 006 049
- US-A1- 2012 048 935

## Beschreibung

Die vorliegende Erfindung betrifft eine Lese/Schreibeinrichtung für Chipkarten.

Die Offenlegungsschrift DE 10 2007 035 645 A1 beschreibt eine Anordnung eines RFID-Readers.

Die Gebrauchsmusterschrift DE 20 2004 006 049 U1 beschreibt ein abnehmbares Kartenlesegerät.

Die Offenlegungsschrift DE 10 252 348 A1 beschreibt einen tragbaren Datenträger.

Die Offenlegungsschrift WO 01/15075 A1 beschreibt eine Vorrichtung zum Datenaustausch zwischen einer Schreib/Leseeinrichtung für kontaktbehaftete Chipkarten und einem kontaktlosen Datenträger.

Die Gebrauchsmusterschrift CN 202 259 897 U beschreibt einen Kartenkonnektor, der ein Gehäuse umfasst. Das Gehäuse besteht aus einem Gehäuseoberteil und einem Gehäuseunterteil. Auf einer Innenseite des Gehäuseunterteils ist ein elektrischer Anschluss angeordnet. Auf dem Gehäuseoberteil ist eine Leiterplatte umfassend eine Antennenspule befestigt. Die Leiterplatte weist einen verlängerten Abschnitt auf. Dieser verlängerte Abschnitt ist elektrisch mit dem elektrischen Anschluss der Innenseite des Gehäuseunterteils verbunden. Das Gehäuse umfasst einen Schlitz zum Einführen einer Smartkarte. Über die Antennenspule der Leiterplatte ist eine kontaktlose Kommunikation mit der Smartkarte vorgesehen. Über den elektrischen Anschluss der Innenseite des Gehäuseunterteils und den verlängerten Abschnitt ist eine kontaktbehaftete Kommunikation mit der Smartkarte vorgesehen.

Die Gebrauchsmusterschrift CN 202 259 897 U offenbart keine Halterung für einen Modulträger, wobei der Modulträger aus der Halterung herausnehmbar ist.

Die Offenlegungsschrift US 2012/0048935 A1 offenbart eine Vorrichtung zum Erfassen einer Karte mit einem integrierten elektronischen Schaltkreis.

Zur elektrischen kontaktbehafteten und kontaktlosen Kommunikation mit einer Chipkarte wird diese in einer entsprechenden Lese/Schreibeinrichtung für Chipkarten an einer vorgegebenen Position angeordnet. Die Kommunikation, wie beispielsweise das Lesen, Schreiben oder Programmieren der Chipkarte, wird dann von einzelnen elektronischen Modulen innerhalb der Lese/Schreibeinrichtung übernommen, die Readermodule genannt werden.

Innerhalb von industriellen Maschinen mit einer Vielzahl von Readermodulen ist die Positionierung der einzelnen Readermodule hinsichtlich der genauen Anordnung der Komponenten zueinander schwierig, da diese unter dem Einfluss der umgebenden mechanischen und elektrischen Komponenten stehen. Dadurch entstehen Auswirkungen auf deren Kommunikation. Auch eine gedrängte Anordnung von mehreren Readern zueinander innerhalb der gleichen Maschine kann zu einer gegenseitigen Beeinflussung oder Störung führen.

Üblicherweise werden die Readermodule zur Kommunikation mit der Chipkarte fest an ihrem Einsatzort innerhalb der Lese-/ Schreibeinrichtung eingebaut, justiert und vermessen. Ein nachträglicher Wechsel der Readermodule ist mit großem Installationsaufwand und mit Stillstandzeiten der Maschine verbunden.

Es ist daher die der Erfindung zugrundeliegende Aufgabe, eine Lese/Schreibeinrichtung für Chipkarten anzugeben, bei der ein schneller Modulwechsel der elektrischen Module zur Kommunikation mit der Chipkarte unter Produktionsbedingungen erfolgen kann.

Diese Aufgabe wird durch Gegenstände mit den Merkmalen nach den unabhängigen Ansprüchen gelöst. Vorteilhafte Ausführungsformen der Erfindung sind Gegenstand der Figuren, der Beschreibung und der abhängigen Ansprüche.

Gemäß einem ersten Aspekt wird die Aufgabe durch eine Lese/ Schreibeinrichtung für Chipkarten gemäß Anspruch 1 gelöst, mit einer Halterung für einen Modulträger und einem Modulträger mit zumindest einem elektronischen Modul zur Kommunikation mit der Chipkarte, welcher aus der Halterung herausnehmbar ist. Die Lese/Schreibeinrichtung für Chipkarten ist beispielsweise eine Personalisierungs-/Verifikationseinheit zur Personalisierung und Verifikation von Chipkarten.

Dadurch wird beispielsweise der technische Vorteil erreicht, dass ein fehlerhaftes oder veraltetes elektronisches Modul auf einfache Weise ausgetauscht werden kann, ohne den Produktionsprozess von personalisierten Chipkarten längere Zeit zu unterbrechen. Ein Modulträger kann auf einfache Weise in die vorgesehene Halterung der Lese/Schreibeinrichtung, wie beispielsweise einer Personalisierungs-/Verifikations-Einheit, eingeschoben und arretiert werden. Somit ist ein schneller Wechsel auf vorkonfigurierte und alternative Module möglich, die andere Parameter oder Geschwindigkeiten unterstützen oder andere Spezifikationen oder Normen erfüllen. Dadurch wird ein servicefreundliches, modulares Konzept zum schnellen Austausch von elementaren Komponenten bei der Personalisierung oder Verifikation von Chipkarten realisiert, beispielsweise im Falle einer Reparatur der Lese/Schreibeinrichtung. Darüber hinaus wird eine störungsfreie Datenübertragung durch die Anordnung der Module im Modulträger gewährleistet.

Gemäß der beanspruchten Erfindung, umfasst der Modulträger ein kontaktloses Modul zur kontaktlosen Kommunikation mit der Chipkarte. Dadurch wird beispielsweise der technische Vorteil erreicht, dass ein Kommunikationsvorgang, beispielsweise bei einer Personalisierung und Verifikation der Chipkarte drahtlos erfolgen kann.

In einer weiteren vorteilhaften Ausführungsform der Lese/Schreibeinrichtung umfasst der Modulträger einen verschiebbaren Aufnahmerahmen zum Aufnehmen des kontaktlosen Moduls. Dadurch wird beispielsweise der technische Vorteil erreicht, dass das kontaktlose Modul gegenüber der Chipkarte mechanisch und elektrisch ausgerichtet und justiert werden kann. Daneben können eine Justage, eine Vermessung und ein Test des Modulträgers mit dem kontaktlosen Modul außerhalb einer Maschine erfolgen.

In einer weiteren vorteilhaften Ausführungsform der Lese/Schreibeinrichtung umgibt der verschiebbare Aufnahmerahmen das kontaktlose Modul seitlich. Dadurch wird beispielsweise der technische Vorteil erreicht, dass ein Austreten von elektromagnetischer Strahlung aus dem Modulträger vermindert wird.

In einer weiteren vorteilhaften Ausführungsform der Lese/Schreibeinrichtung ist der verschiebbare Aufnahmerahmen mit Abschirmmaterialien versehen. Dadurch wird beispielsweise der technische Vorteil erreicht, dass sich die elektromagnetische Strahlung innerhalb des Modulträgers optimal ausbildet bzw. dass ein Austreten von elektromagnetischer Strahlung aus dem Aufnahmerahmen vermindert wird.

In einer weiteren vorteilhaften Ausführungsform der Lese/Schreibeinrichtung umfasst der Modulträger eine Fixiereinrichtung zum Fixieren des verschiebbaren Aufnahmerahmens. Dadurch wird beispielsweise der technische Vorteil erreicht, dass der verschiebbare Aufnahmerahmen an seiner Position auf dem Modulträger fixiert wird und eine einmal vorgenommene Justage des kontaktlosen Moduls aufrechterhalten wird.

In einer weiteren vorteilhaften Ausführungsform der Lese/Schreibeinrichtung umfasst der Modulträger eine Stelleinrichtung zum Verstellen des verschiebbaren Aufnahmerahmens gegenüber dem Modulträger. Dadurch wird beispielsweise der technische Vorteil erreicht, dass der Aufnahmerahmen durch Betätigen der Stelleinrichtung, wie beispielsweise einer Stellschraube, nachjustiert werden kann.

Gemäß der beanspruchten Erfindung, umfasst der Modulträger ein kontaktbehaftetes Modul zur Kontaktbasierten Kommunikation mit der Chipkarte. Dadurch wird beispielsweise der technische Vorteil erreicht, dass der Kommunikationsvorgang, beispielsweise bei einer Personalisierung und Verifikation der Chipkarten, kontaktbasiert mit einer hohen Zuverlässigkeit erfolgen kann und eine alternative Kommunikationsschnittstelle gebildet wird.

Gemäß der beanspruchten Erfindung umfasst der Modulträger einen Steckverbinder zum elektrischen Verbinden des kontaktbehafteten Moduls mit einem Steckverbinder der Halterung. Dadurch wird beispielsweise der technische Vorteil erreicht, dass die Signale zur Kommunikation mit der Chipkarte an die Halterung übertragen werden können, in der weitere Kontakte zum elektrischen Verbinden mit den jeweiligen Kontaktstellen auf der Chipkarte angeordnet sind.

Gemäß der beanspruchten Erfindung umfasst die Halterung einen Kontaktierarm zum Heranführen von elektrischen Verbindungen an die Kontakte der Chipkarte. Dadurch wird beispielsweise der technische Vorteil erreicht, dass die elektrischen Kontakte der Chipkarte an einer dem kontaktlosen Modul gegenüberliegenden Seite der Chipkarte kontaktiert werden können.

In einer weiteren vorteilhaften Ausführungsform der Lese/Schreibeinrichtung umfasst die Halterung eine Kartenauflageplatte zum Auflegen der Chipkarte. Dadurch wird beispielsweise der technische Vorteil erreicht, dass eine schnelle und präzise Positionierung der Chipkarte gegenüber dem kontaktlosen Modul zur kontaktlosen Kommunikation mit der Chipkarte erfolgt.

In einer weiteren vorteilhaften Ausführungsform der Lese/Schreibeinrichtung umfasst die Kartenauflageplatte einen Anschlag zum Begrenzen einer Bewegung der aufgelegten Chipkarte. Dadurch wird beispielsweise ebenfalls der technische Vorteil erreicht, dass während des Produktionsprozesses eine schnelle und präzise Positionierung der Chipkarte erfolgt.

In einer weiteren vorteilhaften Ausführungsform der Lese/Schreibeinrichtung umfasst der entnehmbare Modulträger eine Anschlusseinrichtung zum Anschließen einer Datenleitung für das kontaktlose oder kontaktbehaftete Modul. Dadurch wird beispielsweise der technische Vorteil erreicht, dass die Daten für das kontaktlose oder kontaktbehaftete Modul über den Modulträger gemeinsam an die Module weitergeleitet werden können.

In einer weiteren vorteilhaften Ausführungsform der Lese/Schreibeinrichtung umfasst der entnehmbare Modulträger eine Abschirmfolie zum Abschirmen elektromagnetischer Felder des kontaktlosen Moduls. Dadurch wird beispielsweise der technische Vorteil erreicht, dass der Einfluss der elektromagnetischen Strahlung auf oder durch weitere Lese/Schreibeinrichtungen oder andere Bauteile in der Maschine verringert wird.

In einer weiteren vorteilhaften Ausführungsform der Lese/Schreibeinrichtung umfasst die Lese/Schreibeinrichtung eine Befestigungseinrichtung zum Befestigen des herausnehmbaren Modulträgers an der Halterung. Dadurch wird beispielsweise der technische Vorteil erreicht, dass ein ungewolltes Lösen des Modulträgers verhindert wird. Ausführungsbeispiele der Erfindung sind in den Zeichnungen dargestellt und werden im Folgenden näher beschrieben.

Es zeigen:
- Fig. 1: eine perspektivische Ansicht einer Lese/Schreibeinrichtung für Chipkarten mit einer Halterung und einem entnommenen elektronischen Modulträger;
- Fig. 2: eine perspektivische Ansicht einer Lese/Schreibeinrichtung für Chipkarten mit einem in die Halterung eingesetzten elektronischen Modulträger; und
- Fig. 3: eine perspektivische Ansicht eines elektronischen Modulträgers zur Kommunikation mit der Chipkarte.

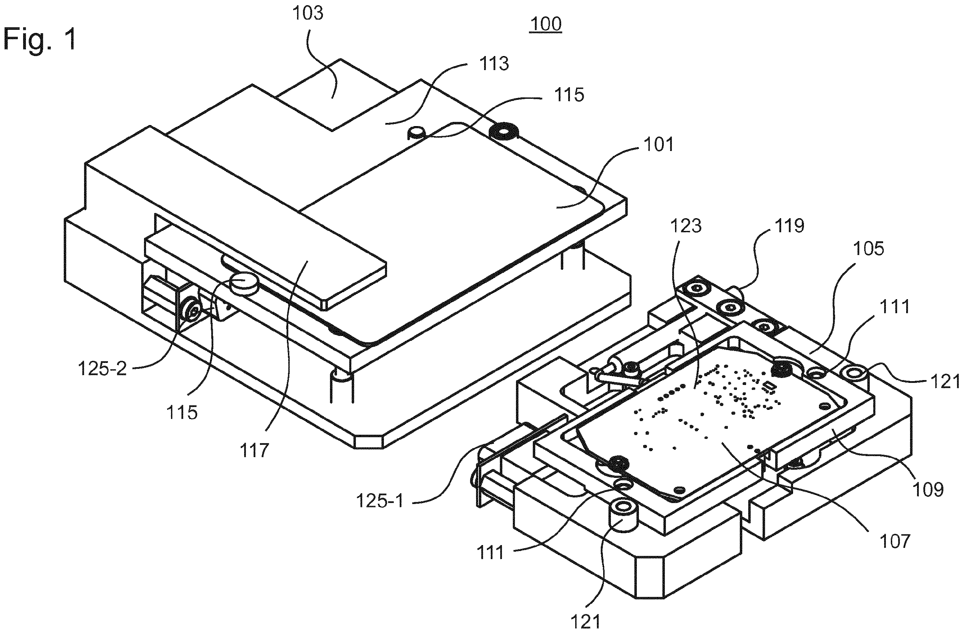

Fig. 1 zeigt eine perspektivische Ansicht einer Lese/Schreibeinrichtung 100 für Chipkarten 101 mit einer Halterung 103 und einem entnommenen elektronischen Modulträger 105 für ein Modul 107 zur Kommunikation mit der Chipkarte 101. Die Lese/Schreibeinrichtung 100 für Chipkarten 101 ist beispielsweise eine Personalisierungs-/Verifikationseinheit zur industriellen Personalisierung und Verifikation von Chipkarten 101. Diese Lese/Schreibeinrichtung 100 kann zusammen mit weiteren Lese/Schreibeinrichtungen 100 in einem Kontaktierturm verwendet werden.

Zur elektrischen kontaktbehafteten oder kontaktlosen Kommunikation wird die Chipkarte 101 in der Lese/Schreibeinrichtung 100 an einer vorgegebenen Position angeordnet. An dieser Position wird die Chipkarte 101 verarbeitet. Die Lese/Schreibeinrichtung 100 sollte in diesem Fall die in einschlägigen Normen festgelegten Parameter zum Lesen und Beschreiben der Chipkarte 101 einhalten.

Chipkarten 101, auch Smartcard oder Integrated Circuit Card (ICC) genannt, sind spezielle Plastikkarten mit eingebautem integriertem Schaltkreis (Chip), der eine Hardware-Logik, Speicher oder auch einen Mikroprozessor enthält. Die Chipkarten werden durch die spezielle Lese/Schreibeinrichtung 100 für Chipkarten 101 angesteuert, auch Kartenlesegerät oder Reader genannt. Die Lese/Schreibeinrichtung 100 kann ein oder mehrere Module zum Programmieren, Auslesen oder Beschreiben der Chipkarten umfassen, auch Readermodule genannt. Werden die Chipkarten 101 personalisiert, können diese als Ausweis- oder Identitätsdokumente dienen.

Die Lese/Schreibeinrichtung 100 für Chipkarten 101 umfasst eine Halterung 103 für einen Modulträger 105 und einen Modulträger 105 mit zumindest einem elektronischen Modul 107 zur Kommunikation mit der Chipkarte 101. Der Modulträger 105 ist aus der Halterung 103 herausnehmbar und in die Halterung 103 einsetzbar. Zu diesem Zweck ist in der Halterung 103 ein Schacht gebildet, in der Modulträger 105 einschiebbar ist.

Der Modulträger 105 umfasst ein kontaktloses Modul 107 zur kontaktlosen Kommunikation mit der Chipkarte 101. Das kontaktlose Modul 107 wird durch eine Leiterplatte 123 mit Leiterbahnen gebildet, das Informationen mittels einer Antenne drahtlos an eine geeignete Chipkarte 101 sendet.

Der Modulträger 105 umfasst einen verschiebbaren Aufnahmerahmen 109 zum Aufnehmen des kontaktlosen Moduls 107. Durch Verschieben des Aufnahmerahmens 109 auf dem Modulträger 105 kann das kontaktlose Modul 107 gegenüber der Chipkarte 101 ausgerichtet werden, so dass eine gute Kopplung der Antenne des kontaktlosen Moduls 107 und der Antenne der Chipkarte 101 realisiert wird. Vor einem Einsetzen des Modulträgers 105 kann somit das kontaktlose Modul 107 positionsmäßig vorjustiert werden und ohne erneute Justage oder Vermessung innerhalb der Maschine verwendet werden (Plug&Play). Hierdurch kann eine Feinjustage der Antennenposition des kontaktlosen Moduls 107 erreicht werden.

Der verschiebbare Aufnahmerahmen 109 kann beispielsweise aus einem Kunststoffteil gebildet sein und das kontaktlose Modul 107 seitlich mit Abschirmmaterialien rahmenförmig umgeben, so dass ein Austritt von elektromagnetischer Strahlung verhindert werden kann. Dadurch können Störeinflüsse auf andere elektrische Komponenten innerhalb der gleichen elektrischen Maschine verringert werden.

Um ein nachträgliches Verrutschen des Aufnahmerahmens 109 zu verhindern, umfasst der Modulträger 105 Fixierschrauben als Fixiereinrichtung 111 zum Fixieren des verschiebbaren Aufnahmerahmens 109. Die Fixierschrauben sind beispielsweise in einem Langloch des Modulträgers 105 zusammen mit dem Aufnahmerahmen 109 verschiebbar. Werden die Fixierschrauben angezogen, ist der Aufnahmerahmen 109 an dem Modulträger 105 arretiert.

Zusätzlich kann der Modulträger 105 eine Stelleinrichtung zum Verstellen des verschiebbaren Aufnahmerahmens 109 gegenüber dem Modulträger 105 umfassen. Diese Stelleinrichtung wird beispielsweise durch eine Stellschraube gebildet, durch deren Drehung eine Verschiebung des Aufnahmerahmens 109 bewirkt wird. In diesem Fall kann durch die Drehung der Stellschraube eine besonders feine Einstellung des kontaktlosen Moduls 107 vorgenommen werden.

Unterhalb des kontaktlosen Moduls 107 ist zusätzlich ein nicht gezeigtes, kontaktbehaftetes Modul zur kontaktbasierten Kommunikation mit der Chipkarte 101 angeordnet, das ebenfalls durch eine Leiterplatte mit Leiterbahnen gebildet wird. Das kontaktbehaftete Modul sendet Informationen mittels einer direkten elektrischen Verbindung an die Chipkarte 101.

Zu diesem Zweck werden die elektrischen Signale des kontaktbehafteten Moduls über einen ersten Steckverbinder 125-1 und einen zweiten Steckverbinder 125-2 an die Halterung 103 übertragen. Bei den Steckverbindern handelt es sich beispielsweise um einen 9-poligen Stecker und eine entsprechende 9-polige Buchse.

Von der Halterung 103 aus werden die Signale des kontaktbehafteten Moduls an einen Kontaktierarm 117 über elektrische Leitungen an die entsprechenden Kontaktstellen auf der Chipkarte 101 herangeführt. Auf diese Weise kann zum einen auf der einen Seite der Chipkarte 101 eine drahtlose Programmierung vorgenommen werden, während auf der anderen Seite der Chipkarte 101 eine kontaktbehaftete Programmierung erfolgt. Die für die Programmierung verwendeten Module können jedoch trotzdem auf dem gleichen Modulträger 105 angeordnet sein und zusammen mit diesem ausgetauscht werden.

Die Halterung 103 umfasst eine Kartenauflageplatte 113 zum Auflegen der Chipkarte 101, so dass eine Positionierung der Chipkarte 101 auf dem kontaktlosen Modul durchgeführt werden kann. Zu diesem Zweck sind auf der Kartenauflageplatte 113 ein oder mehrere Anschläge 115 gebildet, die eine Bewegung der Chipkarte 101 beim Auflegen begrenzen.

Die Daten, die zur Programmierung der Chipkarte 101 von dem kontaktlosen Modul 107 oder dem kontaktbehafteten Modul verwendet werden, beispielsweise Personalisierungsdaten oder Verifikationsdaten, werden dem Modulträger 105 über eine Anschlusseinrichtung 119 zum Anschließen einer Datenleitung zugeführt. Bei dieser Anschlusseinrichtung 119 kann es sich beispielsweise um einen USB-Anschluss handeln.

Um den Einfluss der von dem kontaktlosen Modul 107 ausgesendeten und empfangenen Strahlung zu vermindern, kann an geeigneten Stellen des Modulträgers 105 eine elektromagnetische Abschirmung angeordnet sein, beispielsweise durch eine aufgeklebte Ferritfolie und/oder Metallfolie. Der Modulträger 105 kann mit geeigneten Materialien, wie beispielsweise Ferritfolien, hinsichtlich der HF-Kommunikation optimiert werden.

Um den Modulträger 105 gegen ein Herausfallen zu sichern, ist eine Befestigungseinrichtung 121 zum Befestigen des herausnehmbaren Modulträgers 105 an der Halterung 103 vorgesehen. Bei der Befestigungseinrichtung 121 handelt es sich beispielsweise um einen Hohlbolzen, in den nach dem Einsetzen des Modulträgers 105 in die Halterung 103 eine Schraube eingesetzt wird. Die Schraube verhindert das Herausgleiten des Modulträgers 105 aus dem Schacht der Halterung 103.

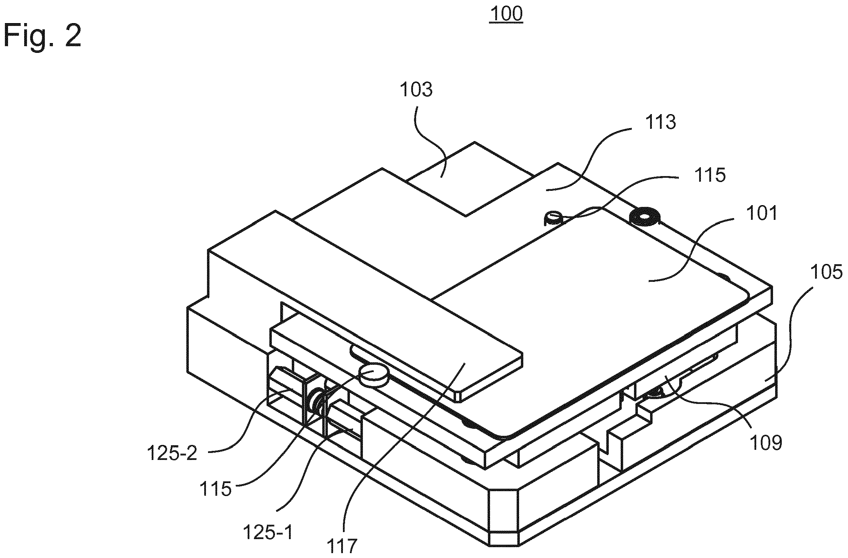

Fig. 2 zeigt eine perspektivische Ansicht einer Lese/Schreibeinrichtung 100 für Chipkarten 101 mit einem in die Halterung 103 eingesetzten elektronischen Modulträger 105. Im zusammengesetzten Zustand befindet sich die Chipkarte 101 auf der Auflageplatte 113 oberhalb des kontaktlosen Moduls 107 und die Steckverbinder 125-1 und 125-2 sind miteinander verbunden.

Beim Wechsel des Modulträgers 105 durch Einschieben in die Lese/Schreibeinrichtung 100, wie beispielsweise die Personalisierungs-/Verifikations-Einheit, wird durch die Steckverbinder 125-1 und 125-2 gleichzeitig eine elektrische Verbindung für das kontaktbehaftete Modul hergestellt.

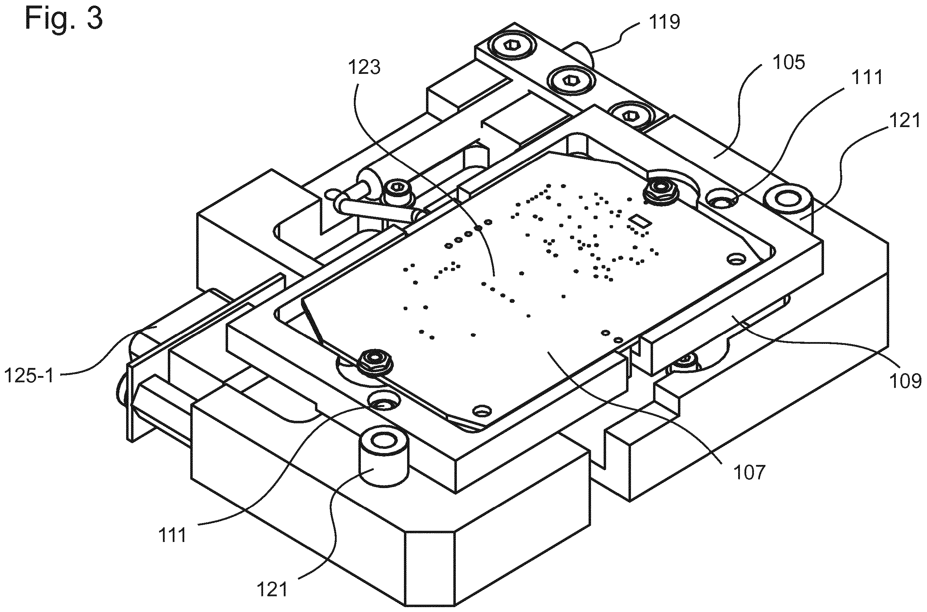

Fig. 3 zeigt eine vergrößerte, perspektivische Ansicht des elektronischen Modulträgers 105 zum Programmieren, Auslesen oder Beschreiben der Chipkarte 101. Der Modulträger 105 umfasst das elektronische kontaktlose Modul 107 zur kontaktlosen Kommunikation mit der Chipkarte 101, sowie ein darunterliegendes kontaktbehaftetes Modul zur kontaktbasierten Kommunikation mit der Chipkarte 101.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Lese/Schreibeinrichtung
- 101: Chipkarte
- 103: Halterung
- 105: Modulträger
- 107: Modul
- 109: Aufnahmerahmen
- 111: Fixiereinrichtung
- 113: Kartenauflageplatte
- 115: Anschlag
- 117: Kontaktierarm
- 119: Anschlusseinrichtung
- 121: Befestigungseinrichtung
- 123: Leiterplatte
- 125-1: Steckverbinder
- 125-2: Steckverbinder

## Patentansprüche

1. Lese/Schreibeinrichtung (100) für Chipkarten (101), mit:
- einer Halterung (103) für einen Modulträger (105), und
- einem aus der Halterung (103) herausnehmbaren Modulträger (105), der in die Halterung (103) eingeschoben und arretiert werden kann,
- wobei der Modulträger (105) ein kontaktloses Modul (107) zur kontaktlosen Kommunikation mit einer Chipkarte (101) umfasst, **dadurch gekennzeichnet, dass** die Halterung (103) einen Kontaktierarm (117) zum Heranführen von elektrischen Verbindungen an Kontaktstellen der Chipkarte (101) umfasst,
- wobei im eingeschobenen und arretierten Zustand der Modulträger (105) über elektrische Leitungen und Steckverbinder (125-1, 125-2) mit der Halterung (103) elektrisch verbunden ist,
- wobei der Modulträger (105) ein weiteres Modul zur kontaktbasierten Kommunikation mit der Chipkarte (101) umfasst, das im eingeschobenen und arretierten Zustand über die Steckverbinder (125-1, 125-2) mit dem Kontaktierarm (117) elektrisch verbunden wird, sodass von der Halterung (103) aus die Signale des weiteren Moduls an den Kontaktierarm (117) über die elektrischen Leitungen an die entsprechenden Kontaktstellen auf der Chipkarte (101) herangeführt werden können.

2. Lese/Schreibeinrichtung (100) nach Anspruch 1, wobei der Modulträger (105) einen verschiebbaren Aufnahmerahmen (109) zum Aufnehmen des kontaktlosen Moduls (107) umfasst.

3. Lese/Schreibeinrichtung (100) nach Anspruch 2, wobei der verschiebbare Aufnahmerahmen (109) das kontaktlose Modul (107) seitlich umgibt.

4. Lese/Schreibeinrichtung (100) nach Anspruch 2 oder 3, wobei der Modulträger (105) eine Fixiereinrichtung (111) zum Fixieren des verschiebbaren Aufnahmerahmens (109) umfasst.

5. Lese/Schreibeinrichtung (100) nach einem der Ansprüche 2 bis 4, wobei der Modulträger (105) eine Stelleinrichtung zum Verstellen des verschiebbaren Aufnahmerahmens (109) gegenüber dem Modulträger (105) umfasst.

6. Lese/Schreibeinrichtung (100) nach einem der vorangehenden Ansprüche, wobei die Halterung (103) eine Kartenauflageplatte (113) zum Auflegen der Chipkarte (101) umfasst.

7. Lese/Schreibeinrichtung (100) nach Anspruch 6, wobei die Kartenauflageplatte (113) einen Anschlag (115) zum Begrenzen einer Bewegung der aufgelegten Chipkarte (101) umfasst.

8. Lese/Schreibeinrichtung (100) nach einem der vorangehenden Ansprüche, wobei der herausnehmbare Modulträger (105) eine Anschlusseinrichtung (119) zum Anschließen einer Datenleitung für das kontaktlose oder weitere Modul (107) umfasst.

9. Lese/Schreibeinrichtung (100) nach einem der vorangehenden Ansprüche, wobei der herausnehmbare Modulträger (105) eine Abschirmfolie zum Abschirmen elektromagnetischer Felder des kontaktlosen Moduls (107) umfasst.

10. Lese/Schreibeinrichtung (100) nach einem der vorangehenden Ansprüche, wobei die Lese/Schreibeinrichtung (100) eine Befestigungseinrichtung (121) zum Befestigen des herausnehmbaren Modulträgers (105) in der Halterung (103) umfasst.

## Claims

1. A read / write device (100) for chip cards (101), comprising:
- a holder (103) for a module support (105), and
- a module support (105) which can be removed from the holder (103) and which can be inserted into the holder (103) and locked,
- wherein the module support (105) comprises a contactless module (107) for contactless communication with a chip card (101),
**characterized by**
the holder (103) comprising a contacting arm (117) for guiding electrical connections to contact points on the chip card (101),
- wherein in the inserted and locked state, the module support (105) is electrically connected to the holder (103) via electrical lines and plug connectors (125-1, 125-2),
- wherein the module support (105) comprises a further module for contact-based communication with the chip card (101), which in the inserted and locked state is electrically connected to the contacting arm (117) via the plug connectors (125-1, 125-2) so that the signals of the further module to the corresponding contact points on the chip card (101) can be fed from the holder (103) via the electrical lines to the contacting arm (117).

2. The read / write device (100) according to claim 1, wherein the module support (105) comprises a displaceable receiving frame (109) for receiving the contactless module (107).

3. The read / write device (100) according to claim 2, wherein the displaceable receiving frame (109) laterally surrounds the contactless module (107).

4. The read / write device (100) according to claim 2 or 3, wherein the module support (105) comprises a fixing device (111) for fixing the displaceable receiving frame (109).

5. The read / write device (100) according to one of claims 2 to 4, wherein the module support (105) comprises an adjusting device for adjusting the displaceable receiving frame (109) with respect to the module support (105).

6. The read / write device (100) according to one of the preceding claims, wherein the holder (103) comprises a card placement plate (113) for placing the chip card (101).

7. The read / write device (100) according to claim 6, wherein the card placement plate (113) comprises a stop (115) for limiting a movement of the placed chip card (101).

8. The read / write device (100) according to one of the preceding claims, wherein the removable module support (105) comprises a connecting device (119) for connecting a data line for the contactless or further module (107).

9. The read / write device (100) according to one of the preceding claims, wherein the removable module support (105) comprises a shielding foil for shielding electromagnetic fields of the contactless module (107).

10. The read / write device (100) according to one of the preceding claims, wherein the read / write device (100) comprises a fastening device (121) for fastening the removable module support (105) in the holder (103).

## Revendications

1. Système de lecture/écriture (100) pour des cartes à puce (101), comportant :
- un dispositif de retenue (103) destiné à un support de module (105), et
- un support de module (105) qui peut être retiré du dispositif de retenue (103) et qui peut être inséré et bloqué dans le dispositif de retenue (103),
- dans lequel le support de module (105) comprend un module sans contact (107) permettant une communication sans contact avec une carte à puce (101), **caractérisé en ce que** le dispositif de retenue (103) comprend un bras de contact (117) permettant d'établir des liaisons électriques sur des points de contact de la carte à puce (101),
- dans lequel, à l'état inséré et bloqué, le support de module (105) est relié électriquement au dispositif de retenue (103) par l'intermédiaire de lignes électriques et de connecteurs enfichables (125-1, 125-2),
- dans lequel le support de module (105) comprend un autre module permettant une communication par contact avec la carte à puce (101), lequel module, à l'état inséré et bloqué, est relié électriquement au bras de contact (117) par l'intermédiaire des connecteurs enfichables (125-1, 125-2), de sorte que les signaux de l'autre module peuvent être établis depuis le dispositif de retenue (103), sur le bras de contact (117), aux points de contact correspondants sur la carte à puce (101) par l'intermédiaire des lignes électriques.

2. Système de lecture/écriture (100) selon la revendication 1, dans lequel le support de module (105) comprend un cadre de réception coulissant (109) permettant de recevoir le module sans contact (107).

3. Système de lecture/écriture (100) selon la revendication 2, dans lequel le cadre de réception coulissant (109) entoure le module sans contact (107) latéralement.

4. Système de lecture/écriture (100) selon la revendication 2 ou 3, dans lequel le support de module (105) comprend un système de fixation (111) permettant de fixer le cadre de réception coulissant (109).

5. Système de lecture/écriture (100) selon l'une des revendications 2 à 4, dans lequel le support de module (105) comprend un système de réglage permettant de régler le cadre de réception coulissant (109) par rapport au support de module (105).

6. Système de lecture/écriture (100) selon l'une des revendications précédentes, dans lequel le dispositif de retenue (103) comprend une plaque de placement de carte (113) permettant de placer la carte à puce (101).

7. Système de lecture/écriture (100) selon la revendication 6, dans lequel la plaque de placement de carte (113) comprend une butée (115) permettant de limiter un déplacement de la carte à puce (101) placée.

8. Système de lecture/écriture (100) selon l'une des revendications précédentes, dans lequel le support de module amovible (105) comprend un système de connexion (119) permettant de connecter une ligne de données destinée au module sans contact ou à l'autre module (107).

9. Système de lecture/écriture (100) selon l'une des revendications précédentes, dans lequel le support de module amovible (105) comprend un film de blindage permettant de blinder les champs électromagnétiques du module sans contact (107).

10. Système de lecture/écriture (100) selon l'une des revendications précédentes, dans lequel le système de lecture/écriture (100) comprend un système de maintien (121) permettant de maintenir le support de module amovible (105) dans le dispositif de retenue (103).
